# EUROPÄISCHE PATENTSCHRIFT

(11) **EP 3 453 648 B1**
(45) Veröffentlichungstag und Bekanntmachung des Hinweises auf die Patenterteilung: **03.04.2024**
(21) Anmeldenummer: 17189926.3
(22) Anmeldetag: 07.09.2017
(51) Int. Cl.: B65G 15/14, B29C 49/42, B29C 49/06, B29C 49/02

(54) **ZULAUFVORRICHTUNG**
INLET DEVICE
DISPOSITIF D'ALIMENTATION

(43) Veröffentlichungstag der Anmeldung: 13.03.2019
(73) Patentinhaber: M. Tanner AG, 8406 Winterthur (CH)
(72) Erfinder: Tanner, Marcel, 8303 Bassersdorf (CH)
(74) Vertreter: Schaad, Balass, Menzl & Partner AG

(56) Entgegenhaltungen:
- EP-A1- 0 642 995
- EP-A1- 1 559 663
- EP-A1- 2 848 558
- EP-A2- 0 805 117
- EP-A2- 3 093 259
- WO-A2-2007/028627
- JP-A- 2007 161 434
- JP-A- 2009 107 838
- JP-U- S5 058 073
- US-A- 3 951 257
- US-A- 5 624 021
- ANONYMOUS: "Motors and Actuators", PTDESIGN, [Online] 15 February 1999 (1999-02-15), pages 60-60, XP055921701, Internet Retrieved from the Internet: URL:https://fab.cba.mit.edu/classes/961.04 /topics/speed_torquecurve.pdf> [retrieved on 2022-02-24]

## Beschreibung

Die vorliegende Erfindung betrifft eine Zulaufvorrichtung für eine Förderanlage für Vorformlinge, welche die geordnet von einem stromaufwärtigen Modul der Förderanlage kommenden Vorformlinge zu einem stromabwärtigen Modul der Förderanlage transportiert, in welchem die Vorformlinge vereinzelt werden, wobei die Zulaufvorrichtung zumindest zwei gegenüberliegend angeordnete Transportschienen aufweist, auf welchen die Vorformlinge jeweils während des Transports mit ihrem Tragring aufliegen.

WO2007028627 A2 offenbart eine Zulaufvorrichtung nach dem Oberbegriff des Anspruchs 1.

Aus der DE 203 08 513 U1 ist eine Vorrichtung bekannt zum Zuführen von Vorformlingen aus thermoplastischem Kunststoff mit einem Tragring im Bereich des offenen Endes zu einer Blasmaschine zum Herstellen von insbesondere PET-Kunststoffflaschen. Die Vorrichtung weist einen bodennah aufgestellten Silo zur ungeordneten Aufnahme einer Vielzahl von Vorformlingen auf, der von oben her durch Einschütten der in Kästen angelieferten Vorformlinge periodisch befüllt wird. Nahe dem Silo ist gleichfalls bodennah ein üblicher Rollensortierer mit zwei gegenläufig angetriebenen, zylindrischen Rollen aufgestellt, der in Transportrichtung leicht nach unten geneigt ist. Durch einen Schrägförderer werden die Vorformlinge am Boden des Silos ungeordnet entnommen und am oberen Ende des Rollensortierers eingefüllt. Das obere Ende des Rollensortierers befindet sich ca. 1 Meter über dem Boden, das untere Ende entsprechend tiefer. Der Rollensortierer ist daher von allen Seiten durch eine auf dem Boden stehende Bedienungsperson normaler Grösse zugänglich, genauso wie der Schrägförderer und der Auslaufbereich des R22185EP/07.09.2017/

Silos. Bei Störungen in diesen kritischen Bereichen kann die sich normalerweise am Bedienpult der Streckblasmaschine aufhaltende Bedienungsperson schnell zugreifen und Störungen sofort beheben, bevor es zu Stillstandszeiten der Streckblasmaschine kommt. Dem Einlaufstern des Linearofens ist eine schräge Rutsche unmittelbar vorgeschaltet, die zwei mit Abstand angeordnete Tragschienen umfasst. Die Vorformlinge liegen mit ihren Tragringen auf den Tragschienen auf und können, angetrieben durch den Hangabtrieb, zwischen diesen in Richtung Einlaufstern rutschen. Die Rutsche hat eine gewisse Pufferfunktion zwecks Sicherung einer lückenlosen Beschickung der Streckblasmaschine und nimmt daher weit über 100 Vorformlinge auf. Dementsprechend liegt ihr oberes Ende mehr als 3 Meter über dem Boden. Zur Überwindung des Höhenunterschieds von ca. 2 Metern oder mehr zwischen dem Auslauf des Rollensortierers, der die am oberen Ende ungeordnet zugeführten Vorformlinge zwischen seinen beiden Rollen in herkömmlicher Weise in eine Einzelreihe formiert und mit dem offenen Ende nach oben ausrichtet, und dem oberen einlaufseitigen Ende der Rutsche ist ein Höhenförderer zwischengeschaltet.

Als nachteilig an dieser Lösung wird angesehen, dass nach dem Rollensortierer eine Rutsche vorgesehen werden muss, welche aufgrund des für die gewünschte lückenlose Beschickung der Streckblasmaschine notwendigen Hangabtriebs bzw. Staudrucks eine beträchtliche Höhe aufweisen muss. Im Falle einer Störung, d.h. wenn es beispielsweise zu einem Verklemmen von Vorformlingen im oberen Bereich der Rutsche kommt, muss eine Bedienperson ggf. auf eine Leiter klettern, um die Störung zu beheben, was zu erhöhten Stillstandszeiten der Anlage führen kann. Eine zusätzliche Luftförderung im Bereich der Rutsche ist zudem kostenaufwendig, da entsprechende Luftfilter benötigt werden.

Es ist daher die Aufgabe der vorliegenden Erfindung, eine Vorrichtung bereitzustellen, welche die geordnet etwa von einem Rollensortierer kommenden Vorformlinge auch bei bodennaher Aufstellung effektiv und sicher an eine nachgeordnete Vereinzelungsvorrichtung (beispielsweise eine Streckblasmaschine mit Einlaufstern oder eine Inspektionsvorrichtung mit Einlaufstern etc.) übergeben kann.

Diese Aufgabe wird erfindungsgemäss gelöst mittels einer Zulaufvorrichtung für eine Förderanlage für Vorformlinge nach Anspruch 1.

Das stromaufwärtige Modul sowie das stromabwärtige Modul sind nicht Teil der erfindungsgemässen Zulaufvorrichtung.

Die hier in Rede stehenden Vorformlinge sind vorzugsweise aus PET-Kunststoff geformt und weisen im Bereich ihrer Öffnung einen äusseren Gewindeabschnitt auf, an welchen sich ein nach aussen abstehender Tragring anschliesst, wobei sich an den Tragring ein im Wesentlichen zylindrischer Körper mit einem abgerundeten, geschlossenen Ende anschliesst.

Die erfindungsgemässe Zulaufvorrichtung ermöglicht insbesondere eine Aufstellung in Bodennähe (d.h. etwa zwischen einem Rollensortierer und einer Inspektionsvorrichtung oder einer Streckblasmaschine etc.) und zwar in einem Neigungswinkel α von etwa 0° bis 8°, vorzugsweise zwischen 2° und 6° gegenüber der Horizontalen. Die Zulaufvorrichtung ist somit jederzeit schnell und bequem für eine Bedienperson zu erreichen.

Der Zulaufvorrichtung kommt ausserdem eine Pufferfunktion zu, d.h. sie ist im Normalbetrieb über ihre volle Länge mit Vorformlingen aufgefüllt (in der Regel geht die Stauung der Vorformlinge bis z.B. in den vorgeschalteten Rollensortierer hinein). Dies gilt auch, wenn vier, sechs oder mehr Riementransporteinheiten bzw. zwei, drei oder mehr Paare von Riementransporteinheiten vorgesehen sind (d.h. zwei sich gegenüberliegend angeordnete Riementransporteinheiten bilden vorliegend jeweils ein Paar).

Nach der vorliegenden Erfindung sind die Antriebe der Riementransporteinheiten jeweils als Servomotor ausgebildet Hierdurch wird beim Stillstand der Antriebe einer Riementransporteinheit ein entsprechendes Drehmoment auf die Vorformlinge aufgebracht. Das Drehmoment bleibt erhalten, ohne dass der Riemen durchschleift.

Bevorzugt beträgt das Drehmoment eines Servomotors jeweils zwischen 0,5 Nm und 2,0 Nm, weiter vorzugsweise zwischen 1,0 Nm und 1,5 Nm.

In einer weiteren bevorzugten Ausführungsform der vorliegenden Erfindung ist im Bereich des stromaufwärtigen Endes der zumindest zwei gegenüberliegenden Riementransporteinheiten ein Sensor S1 (Minimum-Sensor) angeordnet, welcher die An- und Abwesenheit von Vorformlingen detektiert und welcher vorzugsweise mit einer (üblichen) Steuerung verbunden ist. Der Sensor S1 ist regelmässig in Form einer Lichtschranke ausgebildet. Wenn der Sensor S1 keine Vorformlinge mehr in seinem Bereich detektiert, ist der minimale Füllstand unterschritten worden und es wird ein Alarm-Signal ausgelöst, damit mögliche Störungen in vorgeschalteten Einheiten beseitigt werden. Gleichzeitig stoppt etwa die Blasmaschine oder etwa der Einlaufstern eines Klemmförderers, d.h. die Produktion wird unterbrochen.

Im Falle von insgesamt vier (zwei Paaren) oder sechs (drei Paaren) gegenüberliegend angeordneten Riementransporteinheiten ist jeweils auch im Bereich des stromaufwärtigen Endes der dritten und vierten Riementransporteinheiten (d.h. des zweiten Paares) bzw. des stromaufwärtigen Endes der fünften und sechsten Riementransporteinheiten (d.h. des dritten Paares) jeweils ein Sensor S2 bzw. S3 angeordnet, welcher die An- und Abwesenheit von Vorformlingen detektiert und welcher vorzugsweise mit der Steuerung verbunden ist.

Beim Auftreten einer Lücke, d.h. etwa beim Fehlen von Vorformlingen im Bereich des dritten Sensors S3 (des stromaufwärts dritten Paares von Riementransporteinheiten) werden etwa die Antriebe des dritten Paares von Riementransporteinheiten mit einer höheren Geschwindigkeit angesteuert, um Vorformlinge schneller nachzuliefern und die entstandene Lücke zu schliessen.

In einer weiteren bevorzugten Ausführungsform der vorliegenden Erfindung sind im Bereich des stromabwärtigen Endes der gegenüberliegend angeordneten Riementransporteinheiten, vorzugsweise unterhalb der Transportschienen, jeweils zwei gegenüberliegend angeordnete Luftdüseneinheiten (ein Paar) vorgesehen, welche den Transport der Vorformlinge in Transportrichtung (T) unterstützen.

Die Luftdüseneinheiten weisen diesbezüglich vorzugsweise schräggestellte oder kiemenförmige Luftdüsen auf, welche auf die zylindrischen Körper der Vorformlinge (d.h. unterhalb des Tragrings) mit einem oder mehreren Luftstössen einwirken. Dies wird vorzugsweise nur dann benötigt, wenn im Übergangsbereich von einem Paar von Riementransporteinheiten zu einem stromabwärtsgelegenen Paar von Riementransporteinheiten, einer oder mehrere Vorformlinge hängenbleiben oder verklemmen und so eine Lücke entsteht. Die Lücke wird wiederum von einem Sensor detektiert und die entsprechenden Luftdüseneinheiten werden aktiviert.

Die Luftdüseneinheiten können ggf. auch den Übergang der Vorformlinge von der Zulaufschiene zu dem nachgeordneten Modul der Förderanlage, d.h. etwa der Streckblasmaschine oder der Inspektionsvorrichtung, unterstützen.

In einer weiteren bevorzugten Ausführungsform der vorliegenden Erfindung sind zumindest die Transportschienen, die Riementransporteinheiten, die Sensoren und/oder die Luftdüseneinheiten in der Breite verstellbar mittels einer Breitenverstellvorrichtung. Auf diese Weise kann die Zulaufvorrichtungen auf Vorformlinge mit unterschiedlicher Grösse bzw. unterschiedlichem Durchmesser eingestellt werden.

In einer weiteren bevorzugten Ausführungsform der vorliegenden Erfindung weist die Breitenverstellvorrichtung zumindest zwei gegenüberliegend angeordnete, seitliche Befestigungsprofile auf, welche jeweils an Halterungsstangen montiert sind, welche aufeinander zu und voneinander weg bewegbar sind. Hierdurch kann ein besonders effizienter und genauer Breitenverstellmechanismus bereitgestellt werden.

In einer weiteren bevorzugten Ausführungsform der vorliegenden Erfindung sind an den seitlichen Befestigungsprofilen jeweils die Transportschienen, die Riementransporteinheiten, die Sensoren und/oder die Luftdüseneinheiten befestigt. Die seitlichen Befestigungsprofile weisen vorzugsweise zumindest jeweils zwei seitliche sowie eine obere und eine untere Befestigungsschiene auf. Sie sind daher besonders variabel mit zusätzlichen Bauelementen bestückbar.

In einer weiteren bevorzugten Ausführungsform der vorliegenden Erfindung ist eine Höhenbegrenzung für die Vorformlinge vorgesehen, welche in zumindest einer Führung höhenverstellbar gelagert ist. Vorzugsweise handelt es sich bei der Höhenbegrenzung um ein C-Profil, welches oberhalb der Öffnung der Vorformlinge angeordnet ist und die Vorformlinge in der Zulaufvorrichtung (sowie vorzugsweise auch beim Übergang in die Zulaufvorrichtung) niederhält. Das C-Profil ist in zumindest einer Führung gelagert, um ein seitliches Verschwenken zu verhindern.

In einer weiteren bevorzugten Ausführungsform der vorliegenden Erfindung ist die Führung an einem oberen Befestigungsprofil der Zulaufvorrichtung montiert, wobei vorzugsweise die Höhenbegrenzung über ein Höhenverstellelement vertikal innerhalb der Führung bewegbar ist. Das obere Befestigungsprofil entspricht bevorzugt den seitlichen Befestigungsprofilen. An seiner Unterseite ist die Führung für das C-Profil montiert und an seinen seitlichen Befestigungsschienen sind vorzugsweise Kabelkanäle montiert. Das Höhenverstellelement ist vorzugsweise in Form einer Hebelanordnung ausgebildet, welche über ein Bedienelement von aussen betätigbar ist.

In einer weiteren bevorzugten Ausführungsform der vorliegenden Erfindung weisen die Riementransporteinheiten jeweils eine erste und eine zweite Riemenscheibe sowie mehrere Riementransportrollen für den Riemen auf, wobei die erste, vorzugsweise stromabwärtige, Riemenscheibe durch den Antrieb angetrieben wird. Diese Anordnung hat sich für einen zuverlässigen Transport der Vorformlinge als zweckmässig erwiesen. Die zu einem Paar von Riementransporteinheiten gehörigen Antriebe treiben die jeweils ersten Riemenscheiben gegenläufig an, und zwar dergestalt dass die Riemen die Vorformlinge in Transportrichtung (T) durch die Zulaufvorrichtung ziehen.

In einer weiteren bevorzugten Ausführungsform der vorliegenden Erfindung sind die erste und die zweite Riemenscheibe, die mehreren Riementransportrollen und der Antrieb an einer Montageplatte der Riementransporteinheit gelagert. Auf diese Weise können die Riementransporteinheiten besonders leicht und variabel an den seitlichen Befestigungsprofilen montiert werden.

In einer weiteren bevorzugten Ausführungsform der vorliegenden Erfindung sind die Riementransportrollen federvorgespannt (oder mittels Distanzbuchsen) an einem Steg an der Unterseite der Montageplatte gelagert. Hierdurch wird die nötige Andrückkraft für einen sicheren Transport der Vorformlinge (d.h. vorzugsweise im Bereich ihrer Gewindeabschnitte) durch die entsprechend gegenüberliegenden Riemenabschnitte auf der Innenseite der Riementransporteinheiten gewährleistet.

In einer weiteren bevorzugten Ausführungsform der vorliegenden Erfindung ist die Montageplatte in der Höhe gegenüber dem jeweiligen seitlichen Befestigungsprofil verstellbar. Dies ermöglicht eine Feineinstellung der bereits montierten Riementransporteinheit. Besonders bevorzugt ist zu diesem Zweck auf der Montageplatte ein Drehzylinder mit einer Spindeleinrichtung angeordnet, welcher von aussen gut manuell bedienbar ist.

In den beigefügten Zeichnungen sollen zum Zwecke der Anschaulichkeit beispielhafte Ausführungsformen der vorliegenden Erfindung illustriert werden.

Es zeigt:
- Fig. 1: eine Draufsicht auf eine beispielhafte Förderanlage für Vorformlinge, in welche die erfindungsgemässe Zulaufvorrichtung integriert ist;
- Fig. 2: eine perspektivische Ansicht der erfindungsgemässen Zulaufvorrichtung;
- Fig. 3: eine perspektivische Detailansicht der erfindungsgemässen Zulaufvorrichtung;
- Fig. 4: eine Frontalansicht einer erfindungsgemässen Zulaufvorrichtung vom stromabwärtigen Ende her;
- Fig. 5: eine Einzelansicht einer Riementransporteinheit für eine erfindungsgemässe Zulaufvorrichtung.

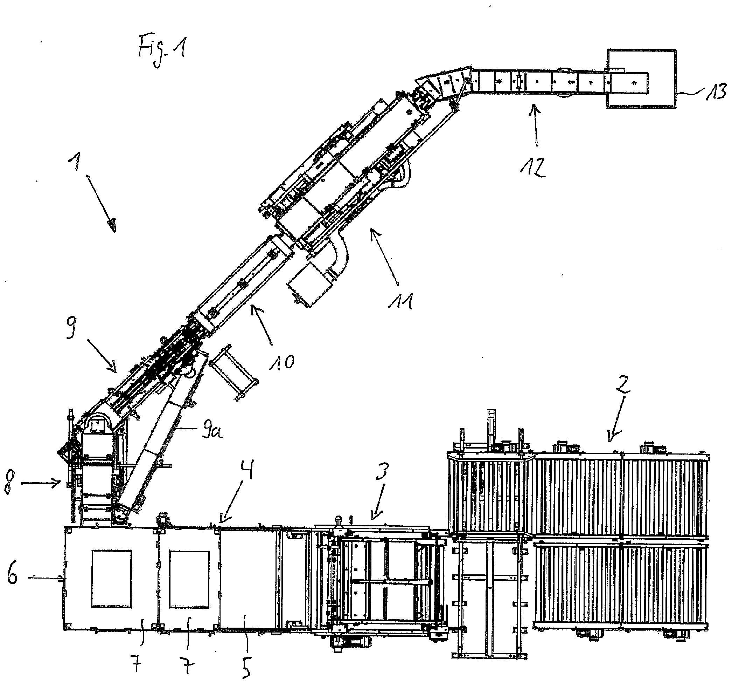

In **Fig. 1** wird eine beispielhafte Förderanlage 1 gezeigt, in welche die erfindungsgemässe Zulaufvorrichtung 10 integriert ist. Eine derartige Förderanlage wird etwa vorgesehen, um Vorformlinge letztlich in eine Streckblasmaschine einzubringen.

Über das Transportrollenband 2 werden dabei Kartons mit den Vorformlingen zu der Kippvorrichtung 3 gebracht, welche jeweils einen Karton aufnimmt und den Inhalt, d.h. die Vorformlinge, auf eine Transportbandvorrichtung 4 ausschüttet. Die Transportbandvorrichtung 4 umfasst ein erstes Transportband 5, eine trichterartige Vorrichtung 6 sowie ein zweites (Quer-) Transportband, welches unterhalb der trichterartigen Vorrichtung 6 angeordnet ist. Das erste Transportband 5 und die trichterartige Vorrichtung 6 weisen jeweils eine Abdeckung 7 auf. Das zweite Transportband übergibt die Vorformlinge ungeordnet an einen Hochförderer 8. An den Hochförderer 8 schliesst sich ein üblicher Rollensortierer 9 mit einem Rückführband 9a an. Stromabwärts des Rollensortierers 9 ist die erfindungsgemässe Zulaufvorrichtung 10 vorgesehen, welche die richtig ausgerichteten Vorformlinge vom Rollensortierer 9 übernimmt und zu einem Einlaufstern einer Inspektions- und Auswerfereinheit eines Klemmförderers 11 führt. An den Klemmförderer 11 schliesst sich etwa noch eine Ablaufschiene 12 an, über welche die vereinzelten Vorformlinge in die, hier lediglich schematisch angedeutete, Streckblasmaschine 13 gelangen. Die erfindungsgemässe Zulaufvorrichtung 10 kann die Vorformlinge natürlich auch direkt zu einer Streckblasmaschine 13 bzw. zu deren Einlaufstern führen.

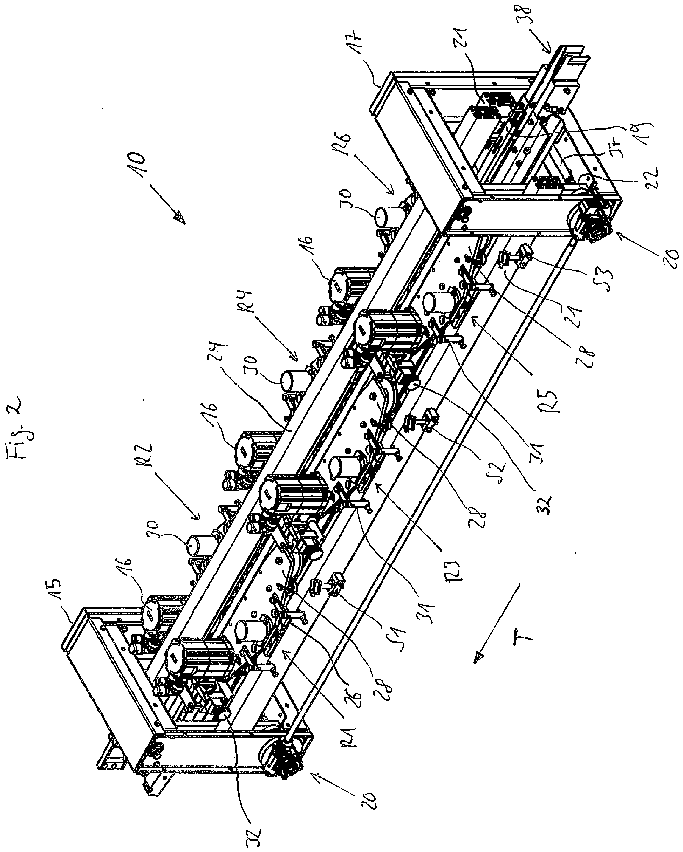

Eine perspektivische Ansicht einer erfindungsgemässen Zulaufvorrichtung 10 wird in **Fig. 2** illustriert. Die erfindungsgemässe Zulaufvorrichtung 10 weist zwei Rahmen 15 und 17 auf, welche eine Breitenverstellvorrichtung 20 umfassen. Die Breitenverstellvorrichtung 20 umfasst zwei Halterungsstangen 22, welche über eine Spindel 37 auf einander zu und voneinander weg bewegt werden können mittels eines Drehknopfs der Breitenverstellvorrichtung 20.

An den Halterungsstangen 22 ist jeweils ein seitliches Befestigungsprofil 21 montiert, wobei an den seitlichen Befestigungsprofilen 21 jeweils weitere Elemente der Zulaufvorrichtung 10 befestigt sind. Die Breitenverstellung ist erforderlich, wenn die erfindungsgemässe Zulaufvorrichtung 10 auf eine andere Vorformlingsgrösse umgestellt werden muss.

Die Vorformlinge gelangen beispielsweise von einem Rollensortierer über den Übergabeabschnitt 38 in die erfindungsgemässe Zulaufvorrichtung 10 und werden in der Transportrichtung T weitertransportiert. Oberhalb des Übergabeabschnitts 38 erkennt man eine Höhenbegrenzung 19 für die Vorformlinge in Gestalt eines C-Profils, welches die Vorformlinge beim Transport durch die erfindungsgemässe Zulaufvorrichtung 10 niederhält. Die Höhenbegrenzung 19 ist an einem oberen Befestigungsprofil 24 montiert, welches seinerseits (unbeweglich) an den Rahmen 15 und 17 befestigt ist. Die Höhenbegrenzung 19 ist über die Höhenverstellung 32 einstellbar.

An den seitlichen Befestigungsprofilen 21 sind die Riementransporteinheiten R1, R2, R3, R4, R5 und R6 montiert. Die Riementransporteinheiten R1, R2, R3, R4, R5 und R6 sind zudem mittels von seitlichen Abstützungen 31 an der Aussenseite der seitlichen Befestigungsprofile 21 gegen ein Verschwenken gesichert. Man erkennt jeweils die Antriebe 16 der einzelnen Riementransporteinheiten R1, R2, R3, R4, R5 und R6 sowie Drehzylinder 30, welche eine Höhenverstellung der einzelnen Riementransporteinheiten R1, R2, R3, R4, R5 und R6 relativ zu den seitlichen Befestigungsprofilen 21 ermöglichen.

Am jeweils stromaufwärtigen Ende ist zwischen den Riementransporteinheiten R1 und R2, R3 und R4 sowie R5 und R6 jeweils ein Sensor S1, S2 bzw. S3 vorgesehen, welcher die An- bzw. Abwesenheit von Vorformlingen in seinem Bereich detektiert. Die Sensoren S1, S2 und S3 sind vorliegend in Form von Lichtschranken ausgebildet und mit einer üblichen Steuerung verbunden (nicht gezeigt).

Im Normalbetrieb ist die erfindungsgemässe Zulaufvorrichtung 10 über ihre gesamte Länge mit Vorformlingen aufgefüllt, d.h. die Vorformlinge stauen sich stromaufwärts bis über den Sensor S3 hinaus (d.h. in der Regel bis in den Rollensortierer oder ein anderes vorgeschaltetes Modul hinein). Im Hinblick auf eine störungsfreie Übergabe der Vorformlinge an die nachgeschaltete Einheit der Förderanlage bringen die Antriebe 16 ein bestimmtes Drehmoment auf die gestauten Vorformlinge auf. Die Antriebe sind insofern als Servomotoren ausgebildet. Das Drehmoment bleibt erhalten, ohne dass die Riemen 33 durchschleifen.

Wenn nun aber der Sensor S3 eine Lücke anzeigt, d.h. es befinden sich keine Vorformlinge mehr in seinem Bereich, werden etwa die Antriebe 16 der Riementransporteinheiten R5 und R6 mit einer grösseren Geschwindigkeit angesteuert, um Vorformlinge nachzuliefern.

Wenn der Sensor S1 (Minimum-Sensor) keine Vorformlinge mehr in seinem Bereich detektiert, ist der minimale Füllstand unterschritten worden und es wird ein Alarm-Signal ausgelöst, damit mögliche Störungen in vorgeschalteten Einheiten beseitigt werden. Gleichzeitig stoppt etwa die Blasmaschine oder etwa der Einlaufstern eines Klemmförderers, d.h. die Produktion wird unterbrochen.

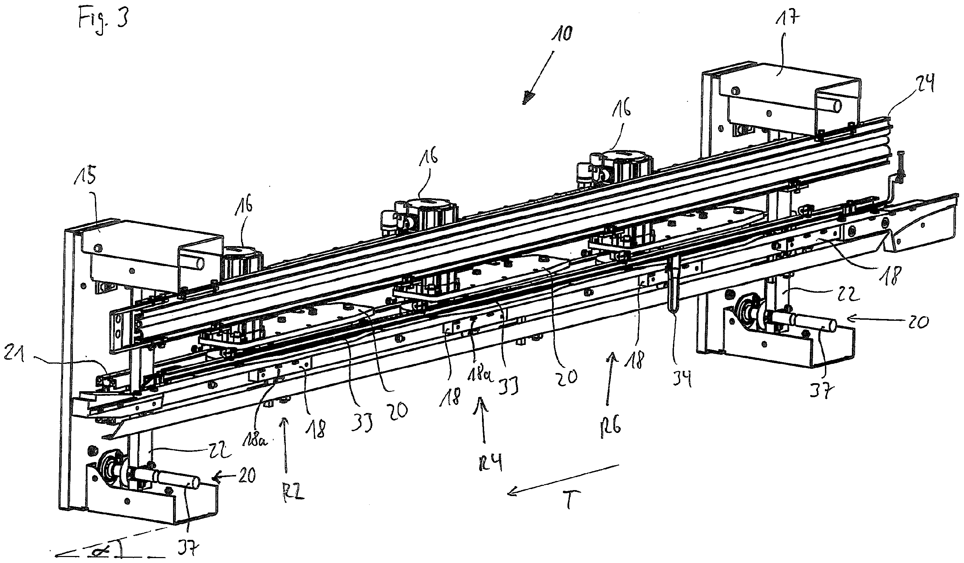

**Fig. 3** zeigt eine perspektivische Detailansicht der erfindungsgemässen Zulaufvorrichtung 10, wobei der vordere Teil der Rahmen 15 und 17 sowie das vordere seitliche Befestigungsprofil 21 mit den Riementransporteinheiten R1, R2 und R3 weggebrochen wurde.

Man erkennt die Riementransporteinheiten R2, R4 und R6 mit den Riemen 33 sowie den Montageplatten 20, auf denen die Antriebe bzw. die Servomotoren 16 angeordnet sind. Unterhalb der Riementransporteinheiten R2, R4 und R6 sind an dem seitlichen Profil 21 Luftdüseneinheiten 18 angeordnet (vorzugsweise im Bereich des stromabwärtigen Endes der Riementransporteinheiten R2, R4 und R6). Die Luftdüseneinheiten 18 weisen schräggestellte bzw. kiemenartige Luftdüsen 18a auf, welche die Vorformlinge ggf. beim Übergang von einer Riementransporteinheit zur nächsten mittels von einem oder mehreren Luftstössen unterstützen (d.h. insbesondere wenn die Vorformlinge in dem Bereich zwischen zwei Riementransporteinheiten hängen bleiben bzw. sich verklemmen). Die Luftdüseneinheiten 18 können aber auch kontinuierlich betrieben werden.

Des Weiteren sind wiederum gezeigt die Halterungsstangen 22 und die Spindeln 37 der Breitenverstellvorrichtung 20, über die das seitliche Profil 21 und mit ihm die Riementransporteinheiten R2, R4 und R6 vor und zurück bewegt werden können. Des Weiteren ist ein beispielhafter Vorformling 34 gezeigt, welche im Bereich seines Gewindeabschnitts in Eingriff mit dem Riemen 33 der Riementransporteinheit R6 ist und welcher in Transportrichtung T durch die erfindungsgemässe Zulaufvorrichtung 10 transportiert wird. Die Düsen 18a der Luftdüseneinheit 18 wirken etwa im Bereich unterhalb des Tragrings auf den Vorformling 34 ein.

Die erfindungsgemässe Zulaufvorrichtung 10 ermöglicht insbesondere auch eine Aufstellung in Bodennähe (d.h. etwa zwischen einem Rollensortierer und einer Inspektionsvorrichtung oder einer Streckblasmaschine etc.) und zwar in einem Neigungswinkel α von etwa 0° bis 8°, vorzugsweise zwischen 2° und 6° gegenüber der Horizontalen. Die erfindungsgemässe Zulaufvorrichtung 10 ist somit jederzeit schnell und bequem für eine Bedienperson zu erreichen.

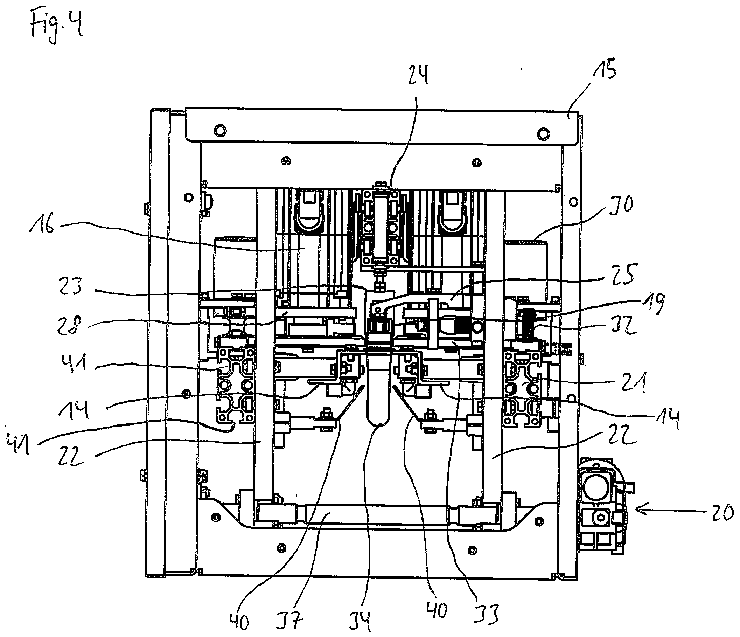

In **Fig. 4** wird eine Frontalansicht der erfindungsgemässen Zulaufvorrichtung 10 (vom stromabwärtigen Ende her) dargestellt. Man erkennt wiederum den Rahmen 15 mit der Breitenverstellvorrichtung 20, mittels welcher die an den Halterungsstangen 22 montierten seitlichen Profile 21 über die Spindel 37 aufeinander zu oder voneinander weg bewegt werden können.

An den seitlichen Profilen 21 sind zum einen seitliche Führungen 40 für den zylindrischen Körper des Vorformlings 34 angeordnet, um einem Verkippen des Vorformlings 34 vorzubeugen. Der Vorformling 34 liegt mit seinem Tragring auf den Transportschienen 14 auf, welche etwa als Z-Profil ausgebildet und ebenfalls an den seitlichen Profilen 21 montiert sind. Oberhalb des Vorformlings 34 ist die Höhenbegrenzung 19 vorgesehen, welche vertikale Bewegungen des Vorformlings 34 verhindern soll. Die seitlichen Befestigungsprofile 21 und das obere Befestigungsprofil 24 weisen jeweils sechs Befestigungsschienen 41 auf (eine oben, eine unten und je zwei seitlich).

Die Höhenbegrenzung 19 ist in einer Führung 23 gelagert, welch an dem oberen Befestigungsprofil 24 montiert ist. Die Höhenbegrenzung 19 kann über die Höhenverstellung 32 bzw. die Hebelanordnung 25 vertikal innerhalb der Führung 23 verstellt werden. Man erkennt weiterhin die auf den Montageplatten 28 angeordneten Antriebe 16 der Riementransporteinheiten R1 und R2. Neben den Antrieben 16 sind die Drehzylinder 30 zu erkennen, über welche die Riementransporteinheiten R1 und R2 in der Höhe relativ zu den seitlichen Befestigungsprofilen 21 verstellbar sind.

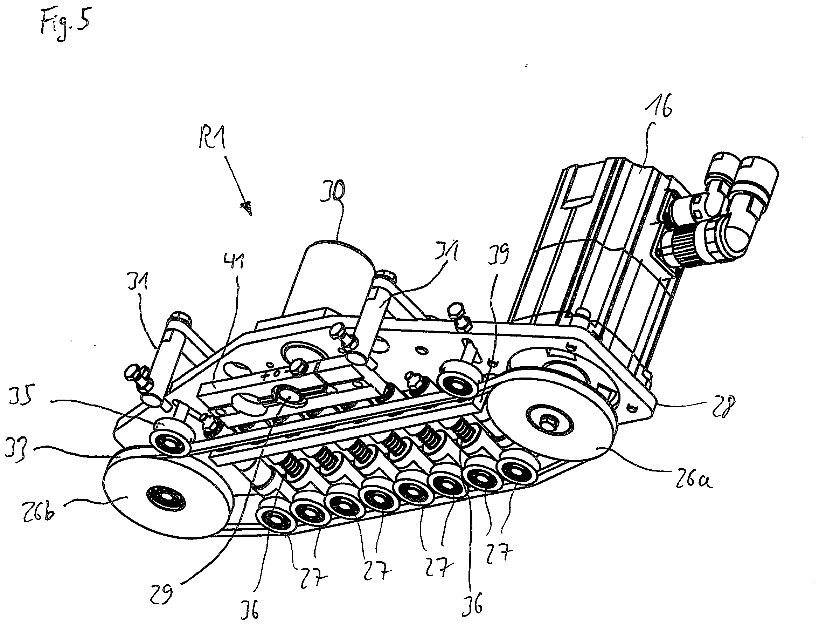

Die **Fig. 5** veranschaulicht schliesslich beispielhaft eine Einzelansicht der Riementransporteinheit R1. Auf der Montageplatte 28 sind der Antrieb 16 und der Drehzylinder 30 angeordnet. Der Antrieb 16 treibt die erste Riemenscheibe 26a an. Der Riemen 33 verläuft um die erste Riemenscheibe 26a und die - nicht angetriebene - zweite Riemenscheibe 26b.

Auf der Innenseite sind des Weiteren Riementransportrollen 27 vorgesehen, welche mittels von Federn (oder Distanzbuchsen) 36 vorgespannt an einem Steg 39 an der Unterseite der Montageplatte 28 gelagert sind. Auf diese Weise wird stets über den Riemen 33 eine ausreichende Andrückkraft auf die Vorformlinge ausgeübt, um diese sicher transportieren zu können.

Auf der Aussenseite ist im Bereich der ersten und zweiten Riemenscheibe 26a und 26b jeweils eine Riemenspannrolle 35 angeordnet, über welche die Spannung des Riemens 33 angepasst werden kann. Die Riemenspannrollen 35 sind an der Montageplatte 28 befestigt. An der Montageplatte 28 sind weiterhin die beiden seitlichen Abstützungen 31 befestigt, welche die Riementransporteinheit R1, wie etwa in **Fig. 2** zu sehen, gegen das seitliche Befestigungsprofil 21 abstützen und so gegen ein ungewolltes Verschwenken absichern.

Die Riementransporteinheit R1 ist über die Verbindungsplatte 41 mit dem seitlichen Befestigungsprofil 21 verbunden (auf dessen Oberseite), wie etwa in **Fig. 2** zu erkennen. Über den Drehzylinder 30 und eine entsprechende Spindeleinrichtung 29 kann die Riementransporteinheit R1 in der Höhe relativ zu dem seitlichen Befestigungsprofil 21 verstellt werden (vgl. die Kennzeichnungen «+», «0» und «-» auf der Aussenseite der Verbindungsplatte 41).

### Bezugszeichenliste:

- 1: Förderanlage
- 2: Transportrollenband
- 3: Kippvorrichtung
- 4: Transportbandvorrichtung
- 5: erstes Transportband
- 6: trichterartige Vorrichtung
- 7: Abdeckung
- 8: Hochförderer
- 9: Rollensortierer
- 10: Zulaufvorrichtung
- 11: Klemmförderer
- 12: Ablaufschiene
- 13: Streckblasmaschine
- 14: Transportschienen
- 15: Rahmen
- 16: Antriebe (Servomotoren)
- 17: Rahmen
- 18: Luftdüseneinheiten
- 19: Höhenbegrenzung
- 20: Breitenverstellvorrichtung
- 21: seitliche Befestigungsprofile
- 22: Halterungsstangen
- 23: Führung
- 24: oberes Befestigungsprofil
- 25: Höhenverstellelement / Hebelanordnung
- 26a, b: Riemenscheiben
- 27: Riementransportrollen
- 28: Montageplatte
- 29: Spindeleinrichtung
- 30: Drehzylinder
- 31: seitliche Abstützungen
- 32: Höhenverstellung
- 33: Riemen
- 34: Vorformling
- 35: Riemenspannrolle
- 36: Federn oder Distanzbuchsen
- 37: Spindel
- 38: Übergabeabschnitt
- 39: Steg Unterseite Montageplatte
- 40: seitliche Führungen
- 41: Verbindungsplatte
- α: Neigungswinkel
- S1-3: Sensoren
- R1-6: Riementransporteinheiten
- T: Transportrichtung

## Patentansprüche

1. Zulaufvorrichtung für eine Förderanlage für Vorformlinge, welche die geordnet von einem stromaufwärtigen Modul der Förderanlage kommenden Vorformlinge zu einem stromabwärtigen Modul der Förderanlage transportiert, in welchem die Vorformlinge vereinzelt werden, wobei
die Zulaufvorrichtung (10) zumindest zwei gegenüberliegend angeordnete Transportschienen (14) aufweist, auf welchen die Vorformlinge jeweils mit einem Tragring aufliegen, wobei
zumindest zwei gegenüberliegend angeordnete Riementransporteinheiten (R1, R2), welche vorzugsweise mit einem Gewindeabschnitt der Vorformlinge in Eingriff gelangen und diese in einer Transportrichtung (T) zu dem stromabwärtigen Modul der Förderanlage transportieren, wobei
die Riementransporteinheiten (R1, R2) jeweils einen Antrieb (16) aufweisen, welcher auf die vor dem stromabwärtigen Modul gestauten Vorformlinge ein Drehmoment aufbringt, mittels welchem ein sicherer Übergang der einzelnen Vorformlinge von der Zulaufvorrichtung (10) in das stromabwärtige Modul gewährleistet werden kann, **dadurch gekennzeichnet, dass** die Antriebe (16) der Riementransporteinheiten (R1, R2) jeweils als Servomotor ausgebildet sind, so dass auch bei einem Stillstand der Antriebe ein entsprechendes Drehmoment auf die Vorformlinge aufgebracht wird.

2. Zulaufvorrichtung gemäss Anspruch 1, **dadurch gekennzeichnet, dass** das Drehmoment des Servomotors jeweils zwischen 0,5 Nm und 2,0 Nm, vorzugsweise zwischen 1,0 Nm und 1,5 Nm liegt.

3. Zulaufvorrichtung gemäss Anspruch 1 oder 2, **dadurch gekennzeichnet, dass** im Bereich des stromaufwärtigen Endes der zumindest zwei gegenüberliegenden Riementransporteinheiten (R1, R2) ein Sensor (S1) angeordnet ist, welcher die An- und Abwesenheit von Vorformlingen detektiert und welcher vorzugsweise mit einer Steuerung verbunden ist.

4. Zulaufvorrichtung gemäss Anspruch 3, **dadurch gekennzeichnet, dass** im Falle von vier (R1, R2, R3, R4) oder sechs (R1, R2, R3, R4, R5, R6) gegenüberliegend angeordneten Riementransporteinheiten jeweils im Bereich des stromaufwärtigen Endes der dritten und vierten Riementransporteinheiten (R3, R4) bzw. der fünften und sechsten Riementransporteinheiten (R5, R6) jeweils ein Sensor (S2, S3) angeordnet ist, welcher die An- und Abwesenheit von Vorformlingen detektiert und welcher vorzugsweise mit der Steuerung verbunden ist.

5. Zulaufvorrichtung gemäss einem der vorhergehenden Ansprüche, **dadurch gekennzeichnet, dass** im Bereich des stromabwärtigen Endes der gegenüberliegend angeordneten Riementransporteinheiten (R1, R2, R3, R4, R5, R6), vorzugsweise unterhalb der Transportschienen (14), jeweils zwei gegenüberliegend angeordnete Luftdüseneinheiten (18) vorgesehen sind, welche den Transport der Vorformlinge in Transportrichtung (T) unterstützen.

6. Zulaufvorrichtung gemäss einem der vorhergehenden Ansprüche, **dadurch gekennzeichnet, dass** zumindest die Transportschienen (14), die Riementransporteinheiten (R1, R2, R3, R4, R5, R6), die Sensoren (S1, S2, S3) und/oder die Luftdüseneinheiten (18) in der Breite verstellbar sind mittels einer Breitenverstellvorrichtung (20) .

7. Zulaufvorrichtung gemäss Anspruch 6, **dadurch gekennzeichnet, dass** die Breitenverstellvorrichtung (20) zumindest zwei gegenüberliegend angeordnete, seitliche Befestigungsprofile (21) aufweist, welche jeweils an Halterungsstangen (22) montiert sind, welche aufeinander zu und voneinander weg bewegbar sind.

8. Zulaufvorrichtung gemäss Anspruch 7, **dadurch gekennzeichnet, dass** an den seitlichen Befestigungsprofilen (21) jeweils die Transportschienen (14), die Riementransporteinheiten (R1, R2, R3, R4, R5, R6), die Sensoren (S1, S2, S3) und/oder die Luftdüseneinheiten (18) befestigt sind.

9. Zulaufvorrichtung gemäss einem der vorhergehenden Ansprüche, **dadurch gekennzeichnet, dass** eine Höhenbegrenzung (19) für die Vorformlinge vorgesehen ist, welche in zumindest einer Führung (23) höhenverstellbar gelagert ist.

10. Zulaufvorrichtung gemäss Anspruch 9, **dadurch gekennzeichnet, dass** die Führung (23) an einem oberen Befestigungsprofil (24) der Zulaufvorrichtung (10) montiert ist und wobei vorzugsweise die Höhenbegrenzung (19) über ein Höhenverstellelement (25) vertikal innerhalb der Führung (23) bewegbar ist.

11. Zulaufvorrichtung gemäss einem der vorhergehenden Ansprüche, **dadurch gekennzeichnet, dass** die Riementransporteinheiten (R1, R2, R3, R4, R5, R6) jeweils eine erste und eine zweite Riemenscheibe (26a, 26b) sowie mehrere Riementransportrollen (27) aufweisen, wobei die erste, vorzugsweise stromabwärtige, Riemenscheibe (26a) durch den Antrieb (16) angetrieben wird.

12. Zulaufvorrichtung gemäss Anspruch 11, **dadurch gekennzeichnet, dass** die erste und die zweite Riemenscheibe (26a, 26b), die mehreren Riementransportrollen (27) und der Antrieb (16) an einer Montageplatte (28) der Riementransporteinheit (R1, R2, R3, R4, R5, R6) gelagert sind.

13. Zulaufvorrichtung gemäss Anspruch 12, **dadurch gekennzeichnet, dass** die Riementransportrollen (27) federvorgespannt an der Montageplatte (28) der Riementransporteinheit (R1, R2, R3, R4, R5, R6) gelagert sind.

14. Zulaufvorrichtung gemäss einem der Ansprüche 12 bis 13, **dadurch gekennzeichnet, dass** die Montageplatte (28) in der Höhe gegenüber dem jeweiligen seitlichen Befestigungsprofil (21) verstellbar ist.

15. Zulaufvorrichtung gemäss Anspruch 14, **dadurch gekennzeichnet, dass** auf der Montageplatte (28) zur Höhenverstellung ein Drehzylinder (30) mit einer Spindeleinrichtung (29) angeordnet ist.

## Claims

1. Feed device for a conveyor system for preforms, which transports the preforms coming in order from an upstream module of the conveyor system to a downstream module of the conveyor system, in which the preforms are separated, wherein
the feed device (10) has at least two transport rails (14) arranged opposite one another, on which the preforms each bear on with a support ring, wherein
at least two belt transport units (R1, R2) arranged opposite one another, which preferably come into engagement with a threaded portion of the preforms and transport these in a transport direction (T) to the downstream module of the conveyor system, wherein
the belt transport units (R1, R2) each have a drive (16) which applies a torque to the preforms accumulated before the downstream module, by means of which torque a safe transfer of the individual preforms from the feed device (10) into the downstream module can be ensured, **characterized in that** the drives (16) of the belt transport units (R1, R2) are each designed as a servomotor, so that a corresponding torque is applied to the preforms even when the drives are at a standstill.

2. Feed device according to claim 1, **characterized in that** the torque of the servomotor is between 0.5 Nm and 2.0 Nm in each case, preferably between 1.0 Nm and 1.5 Nm.

3. Feed device according to claim 1 or 2, **characterized in that** a sensor (S1) is arranged in the region of the upstream end of the at least two opposing belt transport units (R1, R2), which sensor (S1) detects the presence and absence of preforms and which is preferably connected to a control unit.

4. Feed device according to claim 3, **characterized in that**, in the case of four (R1, R2, R3, R4) or six (R1, R2, R3, R4, RS, R6) belt transport units arranged opposite one another, a sensor (S2, S3) is arranged in each case in the region of the upstream end of the third and fourth belt transport units (R3, R4) or of the fifth and sixth belt transport units (R5, R6), respectively, which sensor (S2, S3) detects the presence and absence of preforms and which is preferably connected to the control unit.

5. Feed device according to one of the preceding claims, **characterized in that** in the region of the downstream end of the oppositely arranged belt transport units (R1, R2, R3, R4, R5, R6), preferably below the transport rails (14), two oppositely arranged air nozzle units (18) are provided in each case, which support the transport of the preforms in the transport direction (T).

6. Feed device according to one of the preceding claims, **characterized in that** at least the transport rails (14), the belt transport units (R1, R2, R3, R4, R5, R6), the sensors (S1, S2, S3) and/or the air nozzle units (18) are adjustable in width by means of a width adjustment device (20) .

7. Feed device according to claim 6, **characterized in that** the width adjustment device (20) has at least two lateral fastening profiles (21) arranged opposite one another, which are each mounted on retaining rods (22) which can be moved towards and away from one another.

8. Feed device according to claim 7, **characterized in that** the transport rails (14), the belt transport units (R1, R2, R3, R4, R5, R6), the sensors (S1, S2, S3) and/or the air nozzle units (18) are each fastened to the lateral fastening profiles (21).

9. Feed device according to one of the preceding claims, **characterized in that** a height limiter (19) is provided for the preforms, which is mounted in at least one guide (23) so as to be adjustable in height.

10. Feed device according to claim 9, **characterized in that** the guide (23) is mounted on an upper fastening profile (24) of the feed device (10) and wherein preferably the height limiter (19) can be moved vertically within the guide (23) via a height adjustment element (25).

11. Feed device according to one of the preceding claims, **characterized in that** the belt transport units (R1, R2, R3, R4, R5, R6) each have a first and a second belt pulley (26a, 26b) and a plurality of belt transport rollers (27), wherein the first, preferably downstream, belt pulley (26a) is driven by the drive (16).

12. Feed device according to claim 11, **characterized in that** the first and second belt pulleys (26a, 26b), the plurality of belt transport rollers (27) and the drive (16) are supported on a mounting plate (28) of the belt transport unit (R1, R2, R3, R4, R5, R6).

13. Feed device according to claim 12, **characterized in that** the belt transport rollers (27) are spring-biased on the mounting plate (28) of the belt transport unit (R1, R2, R3, R4, R5, R6).

14. Feed device according to one of the claims 12 to 13, **characterized in that** the mounting plate (28) is adjustable in height relative to the respective lateral fastening profile (21).

15. Feed device according to claim 14, **characterized in that** a rotary cylinder (30) with a spindle device (29) is arranged on the mounting plate (28) for height adjustment.

## Revendications

1. Dispositif d'alimentation pour une installation de transport de préformes, qui transporte les préformes arrivant de manière ordonnée d'un module amont de l'installation de transport vers un module aval de l'installation de transport, dans lequel les préformes sont séparées, dans lequel
le dispositif d'alimentation (10) présente au moins deux rails de transport (14) disposés en face l'un de l'autre, sur lesquels les préformes s'appuient chacune avec un anneau porteur, où
au moins deux unités de transport par courroie (R1, R2) disposées en face l'une de l'autre, qui viennent de préférence en prise avec une partie filetée des préformes et transportent celles-ci dans une direction de transport (T) vers le module aval de l'installation de transport, dans lequel
les unités de transport à courroie (R1, R2) présentent chacune un entraînement (16) qui applique aux préformes accumulées devant le module aval un couple de rotation au moyen duquel un transfert sûr des préformes individuelles du dispositif d'alimentation (10) dans le module aval peut être garanti, **caractérisé en ce que** les entraînements (16) des unités de transport à courroie (R1, R2) sont réalisés chacun sous forme de servomoteur, de sorte qu'un couple de rotation correspondant est appliqué aux préformes même lorsque les entraînements sont arrêtés.

2. Dispositif d'alimentation selon la revendication 1, **caractérisé en ce que** le couple de rotation du servomoteur est respectivement compris entre 0,5 Nm et 2,0 Nm, de préférence entre 1,0 Nm et 1,5 Nm.

3. Dispositif d'alimentation selon la revendication 1 ou 2, **caractérisé en ce que** dans la région de l'extrémité amont des au moins deux unités de transport de courroie (R1, R2) opposées est disposé un capteur (S1) qui détecte la présence et l'absence de préformes et qui est de préférence relié à une commande.

4. Dispositif d'alimentation selon la revendication 3, **caractérisé en ce que**, dans le cas de quatre (R1, R2, R3, R4) ou six (R1, R2, R3, R4, RS, R6) unités de transport de courroie disposées en face les unes des autres, chaque fois dans la région de l'extrémité amont des troisième et quatrième unités de transport de courroie (R3, R4) ou des cinquième et sixième unités de transport de courroie (R5, R6), un capteur (S2, S3) est respectivement disposé, lequel détecte la présence et l'absence de préformes et qui est de préférence relié à la commande.

5. Dispositif d'alimentation selon l'une des revendications précédentes, **caractérisé en ce que** dans la région de l'extrémité aval des unités de transport à courroie (R1, R2, R3, R4, R5, R6) disposées en face les unes des autres, de préférence en dessous des rails de transport (14), il est prévu respectivement deux unités de buses d'air (18) disposées en en face les unes des autres, qui assistent le transport des préformes dans la direction de transport (T).

6. Dispositif d'alimentation selon l'une des revendications précédentes, **caractérisé en ce qu'**au moins les rails de transport (14), les unités de transport de courroie (R1, R2, R3, R4, R5, R6), les capteurs (S1, S2, S3) et/ou les unités de buses d'air (18) sont réglables en largeur au moyen d'un dispositif de réglage de largeur (20).

7. Dispositif d'alimentation selon la revendication 6, **caractérisé en ce que** le dispositif de réglage de largeur (20) comprend au moins deux profilés de fixation latéraux (21) disposés de manière opposée, qui sont montés respectivement sur des barres de support (22) qui peuvent être rapprochées et éloignées l'une de l'autre.

8. Dispositif d'alimentation selon la revendication 7, **caractérisé en ce que** les rails de transport (14), les unités de transport de courroie (R1, R2, R3, R4, R5, R6), les capteurs (S1, S2, S3) et/ou les unités de buses d'air (18) sont respectivement fixées sur les profilés de fixation latéraux (21).

9. Dispositif d'alimentation selon l'une des revendications précédentes, **caractérisé en ce qu'**il est prévu une limitation de hauteur (19) pour les préformes, qui est logée de manière réglable en hauteur dans au moins un guide (23).

10. Dispositif d'alimentation selon la revendication 9, **caractérisé en ce que** le guide (23) est monté sur un profilé de fixation supérieur (24) du dispositif d'alimentation (10) et dans lequel, de préférence, la limite de hauteur (19) est mobile verticalement à l'intérieur du guide (23) par l'intermédiaire d'un élément de réglage de hauteur (25).

11. Dispositif d'alimentation selon l'une des revendications précédentes, **caractérisé en ce que** les unités de transport de courroie (R1, R2, R3, R4, R5, R6) présentent chacune une première et une deuxième poulie (26a, 26b) ainsi que plusieurs rouleaux de transport de courroie (27), la première poulie (26a), de préférence en aval, étant entraînée par l'entraînement (16).

12. Dispositif d'alimentation selon la revendication 11, **caractérisé en ce que** la première et la deuxième poulie (26a, 26b), la pluralité de rouleaux de transport de courroie (27) et l'entraînement (16) sont montés sur une plaque de montage (28) de l'unité de transport de courroie (R1, R2, R3, R4, R5, R6).

13. Dispositif d'alimentation selon la revendication 12, **caractérisé en ce que** les rouleaux de transport de courroie (27) sont montés sous tension de ressort sur la plaque de montage (28) de l'unité de transport de courroie (R1, R2, R3, R4, R5, R6).

14. Dispositif d'alimentation selon l'une des revendications 12 à 13, **caractérisé en ce que** la plaque de montage (28) est réglable en hauteur par rapport au profilé de fixation latéral respectif (21).

15. Dispositif d'alimentation selon la revendication 14, **caractérisé en ce qu'**un cylindre rotatif (30) avec un dispositif à broche (29) est disposé sur la plaque de montage (28) pour le réglage en hauteur.
